Europäisches Patentamt

European Patent Office

Office européen des brevets

(19)

(11) Veröffentlichungsnummer: **0 124 694**
**A2**

(12) **EUROPÄISCHE PATENTANMELDUNG**

(21) Anmeldenummer: **84101786.6**

(22) Anmeldetag: **21.02.84**

(51) Int. Cl.³: **A 47 J 41/02**

(30) Priorität: **09.05.83 DE 8313738 U**

(43) Veröffentlichungstag der Anmeldung:
**14.11.84 Patentblatt 84/46**

(84) Benannte Vertragsstaaten:
**AT BE CH DE FR GB IT LI LU NL SE**

(71) Anmelder: **Rotpunkt Dr. Anso Zimmermann**
**Industriestrasse**
**D-6434 Niederaula / Bad Hersfeld(DE)**

(72) Erfinder: **Zimmermann, Anso, Dr.**
**Seilerweg 34**
**D-6430 Bad Hersfeld(DE)**

(74) Vertreter: **Körber, Wolfhart, Dr. et al,**
**Patentanwälte Dipl.-Ing. H. Mitscherlich Dipl.-Ing. K.**
**Gunschmann Dr.rer.nat. W. Körber Dipl.Ing. J.**
**Schmidt-Evers Dipl.-Ing. W. Melzer Steinsdorfstrasse 10**
**D-8000 München 22(DE)**

(54) Schraubverschluss für Isolierkannen.

(57) Es wird eine Isolierkanne mit einem wärmeisolierenden Innenbehälter (1) und einem diesen umgebenden Mantel (2, 4) angegeben, wobei in den Kopfteil (4) des Mantels ein Schraubverschluß (11) zum Verschließen der Öffnung (3) des Innenbehälters (1) einschraubbar ist.

Von der Unterseite (12) des Schraubverschlußes (11) ragt eine Schürze weg, die Durchgangsöffnungen (15, 18, 20) aufweist, durch die in der Ausgießstellung des Schraubverschlußes (11) Flüssigkeit über den Ausgießer (8) der Isolierkanne ausgießbar ist, wobei Rückstände, Kräuter, Blätter oder dergleichen an der Schürze zurückgehalten werden. Die Schürze kann gelenkig an der Unterseite (12) angeformt sein. Die Schürze kann als gewölbte, etwa halbzylindrische im wesentlichen axial angeordnete Platte (13) oder als im wesentlichen radial angeordnete Scheibe (17), die sich weitestgehend über den Querschnitt der Öffnung (3) des Innenbehälters (1) erstreckt, ausgebildet sein. Im letzteren Fall kann zusätzlich eine gewölbte, etwa halbzylindrische axial gerichtete Platte (19) angeformt sein.

Fig. 1

EP 0 124 694 A2

Croydon Printing Company Ltd.

# SCHRAUBVERSCHLUSS FÜR ISOLIERKANNEN

Die Erfindung betrifft einen Schraubverschluß für Isolierkannen, die aus einem wärmeisolierenden Innenbehälter und einem diesen umgebenden Mantel bestehen, wobei der Schraubverschluß in einen einen angeformten Ausgießer aufweisenden Kopfteil des Mantels einschraubbar ist, aus Kunststoff besteht und vorzugsweise einen eingesetzten sich im Schließzustand auf eine Dichtfläche der zu verschließenden Öffnung dichtend anliegenden Dichtring aus elastischem Material enthält, der bei einer Drehung des Schraubverschlußes in eine definierte Ausgießstellung, z.B. um etwa 180$^{\circ}$, zum Ausgießen einer Flüssigkeit im Innenbehälter ausreichend weit abgehoben ist.

Derartige Schraubverschlüße sind für Isolierkannen seit längerem handelsüblich. Insbesondere werden derartige Schraubverschlüße mit einem solch steilgängigen Außengewinde versehen, das in ein entsprechend steiles Gewinde im Kopfteil der Isolierkanne einschraubbar ist, daß eine halbe Drehung, d.h. eine Drehung um 180$^{\circ}$, des Schraubverschlußes genügt, um den Dichtring des Schraubverschlußes so weit von der Dichtfläche im Bereich der zu verschließenden Öffnung abzuheben, daß eine genügend große Ausflußöffnung für Flüssigkeit zu einem ebenfalls am Kopfteil der Isolierkanne angebrachten Ausgießer hin freigegeben wird.

In solchen Isolierkannen werden nicht nur rückstandsfreie Säfte oder sonstige trinkbaren Flüssigkeiten aufbewahrt, es sollen auch in der Isolierkanne Flüssigkeiten wie Tee direkt aus den natürlichen Kräutern zubereitet werden, d.h. daß sich in der Kanne die Teeblätter und sonstigen Kräuter befinden.

Auch        Säfte sind nicht stets rückstandsfrei.
Werden derartige Flüssigkeiten bei der bekannten Isolierkanne ausgegossen, gelangen die Rückstände, die Kräuter oder Blätter über den Ausgießer in das Trinkgefäß,
was unerwünscht ist. Ferner können Rückstände, Kräuter,
Blätter oder dergleichen  im Ausgießer das Ausgießverhalten beeinträchtigen, wodurch die Flüssigkeit daneben
gegossen werden könnte.

Es wurde bereits vorgeschlagen, den Schraubverschluß
an seiner Unterseite mit einem in den Innenbehälter
ragenden Sieb-Hohlkörper zu versehen, der dort lösbar
angebracht ist, und in den die Blätter oder dergleichen
vor dem Einsetzen in den Innenbehälter einfüllbar sind.
Abgesehen davon, daß der Sieb-Hohlkörper, da er lösbar
ist, sehr leicht verloren gehen kann oder sich im
Schließzustand vom Schraubverschluß lösen kann, kann
dadurch nicht gewährleistet werden, daß die Blätter
oder Kräuter in dem Sieb-Hohlkörper stets in die heiße
Flüssigkeit eingetaucht sind. Ferner ist es erwünscht,
die Kräuter und Blätter vor dem Einfüllen der
Flüssigkeit, insbesondere kochendes Wasser, in den
Innenbehälter zu geben. Das Problem, das bei Rückstände enthaltenden Säften auftreten kann, wird dadurch
nicht gelöst.

Im übrigen werden derartige Isolierkannen nicht nur für
heiße Flüssigkeiten, sondern auch für gekühlte Flüssigkeiten verwendet, wobei es erwünscht ist, Eisstückchen oder dergleichen in die Isolierkanne einzufüllen,
ohne daß diese beim Ausgießen mit ausgegossen werden
sollen.

Es ist daher Aufgabe der Erfindung ein Schraubverschluß
der eingangs genannten Art so auszubilden, daß das Ausgießen von Rückständen, Kräutern, Blättern oder dergleichen, die sich frei in dem Innenbehälter befinden, wirksam verhindert ist.

Die Aufgabe wird erfindungsgemäß dadurch gelöst, daß von der dem Innenbehälter zugewandten Unterseite des Schraubverschlußes ein Schürze mit Durchgangsöffnungen für die Flüssigkeit so wegragt, daß in der Ausgießstellung Flüssigkeit im Innenbehälter zwangsweise unter Rückhalten von Rückständen, Kräutern, Blättern oder dergleichen in der Flüssigkeit im wesentlichen nur durch die Durchgangsöffnungen der Schürze zum Ausgießer fließt.

Dies wird gemäß einer Ausführungsform durch eine an der Unterseite des Schraubverschlußes gelenkig befestigte, insbesondere angeformte gewölbte etwa halbzylindrische und axial ausgerichtete Platte erreicht. Gemäß einer anderen Ausführungsform wird dies durch eine an der Unterseite des Schraubverschlußes im wesentlichen radial gerichtet angebrachte und in die Öffnung des Isolierbehälters ragende Scheibe erreicht, die sich weitestgehend über den Querschnitt der Öffnung erstreckt.
Auch an dieser (mindestens einen) Scheibe kann eine gewölbte etwa halbzylindrische sich axial erstreckende Platte angebracht sein.

Weitere vorteilhafte Ausführungsformen ergeben sich aus den Unteransprüchen.

Bei der einen Ausführungsform klappt in der Ausgießstellung beim Ausgießen die Platte gegen die Innenwand des Innenbehälters derart, daß die Flüssigkeit durch die Durchgangsöffnungen fließt, Rückstände,

Kräuter, Blätter oder dergleichen jedoch nicht an der Platte vorbeischwimmen können, sondern in der Platte nach Art eines Siebes zurückgehalten werden.

Bei der anderen Ausführungsform versperrt die Scheibe den Strömungsquerschnitt des Innenbehälters derart, daß in der Ausgießstellung die Flüssigkeit durch die Durchgangsöffnungen fließen kann, Rückstände, Kräuter, Blätter oder dergleichen jedoch an der Scheibe zurückgehalten werden.

Die Ausführungsform mit von der Unterseite des Schraubverschlußes beabstandeter radial gerichteter Scheibe hat noch den zusätzlichen Vorteil, daß der Wärmeverlust bzw. Kälteverlust einer in der Isolierkanne aufbewahrten Flüssigkeit erheblich herabgesetzt ist, so daß die Flüssigkeit über einen wesentlich längeren Zeitraum von der Isolierkanne in einem gewünschten Temeperaturbereich gehalten werden kann (vgl. DE-OS 25 48 19[9]).

Die Erfindung wird anhand der in der Zeichnung dargestellten Ausführungsbeispiele näher erläutert.

Es zeigen

Fig. 1  im Teilschnitt den oberen Bereich einer Isolierkanne mit Schraubverschluß,

Fig. 2  den Schnitt II-II in Fig. 1,

Fig. 3  in einer Ansicht ähnlich Fig. 1 eine andere Ausführungsform des Schraubverschlußes,

Fig. 4  den Schnitt IV-IV in Fig. 3.

Die Isolierkanne besteht aus einem wärmeisolierenden Isolierbehälter 1 wie einem Dewargefäß und einem diesen umgebenden ein- oder mehrteiligen Mantel.

Bei dem dargestellten Ausführungsbeispiel ist der Mantel mehrteilig ausgebildet und weist einen im wesentlichen zylindrischen den Innenbehälter 1 umgebenden Mantelteil 2 und einen den Mantelteil 2 im Bereich der Öffnung 3 des Isolierbehälters 1 nach oben abschließenden Kopfteil 4 auf, der gegen den oberen Rand der Öffnung 3 des Isolierbehälters 1 durch eine Dichtung 5 abgedichtet ist.und mit dem Mantelteil 2 auf geeignete Weise verbunden ist, wie durch Verrastung oder dergleichen.

Der Kopfteil 4 umfaßt einen zylindrischen Rand 6 mit Innengewinde 7, wobei der zylindrische Rand 6 auf einer Seite zu einem Ausgießer 8 geformt ist. Auf der dem Ausgießer 8 diametral gegenüberliegenden Seite ist ein Griff oder Henkel 9 angeformt. In das Innengewinde 7 ist über ein steilgängiges Außengewinde 1o ein Schraubverschluß 11 eingeschraubt, der aus einem gespritzten Kunststoffteil besteht und eine in die Öffnung 3 des Isolierbehälters 1 ragende Unterseite 12 aufweist.

An der Oberseite des Schraubverschlußes ist eine Markierung 22 angedeutet, mit der die Lage des Schraubverschlußes 11 von außen sofort sichtbar markiert werden kann.

Bei den Ausführungsformen ist jeweils die Schließstellung dargestellt, in der sich die Markierung 22 auf Seiten des Griffs 9 befindet. Bei den Ausführungsbeispielen sind die Gewinde 7,1o so bemessen, daß bei einer Drehung des Schraubverschlußes 11 um 18o° die Ausgießstellung erreicht ist, in der die Markierung 22 sich im Bereich des Ausgießers 8 befindet.

In dem unteren Bereich des Schraubverschlußes 11 ist eine Ringdichtung 23 eingeklemmt, die im Schließzustand die zu verschließende Öffnung 3 des Innenbehälters 1 nach außen abdichtet und im Ausgießzustand einen Strömungsweg vom Innenraum des Innenbehälters 1 nach außen zum Ausgießer 8 freigibt.

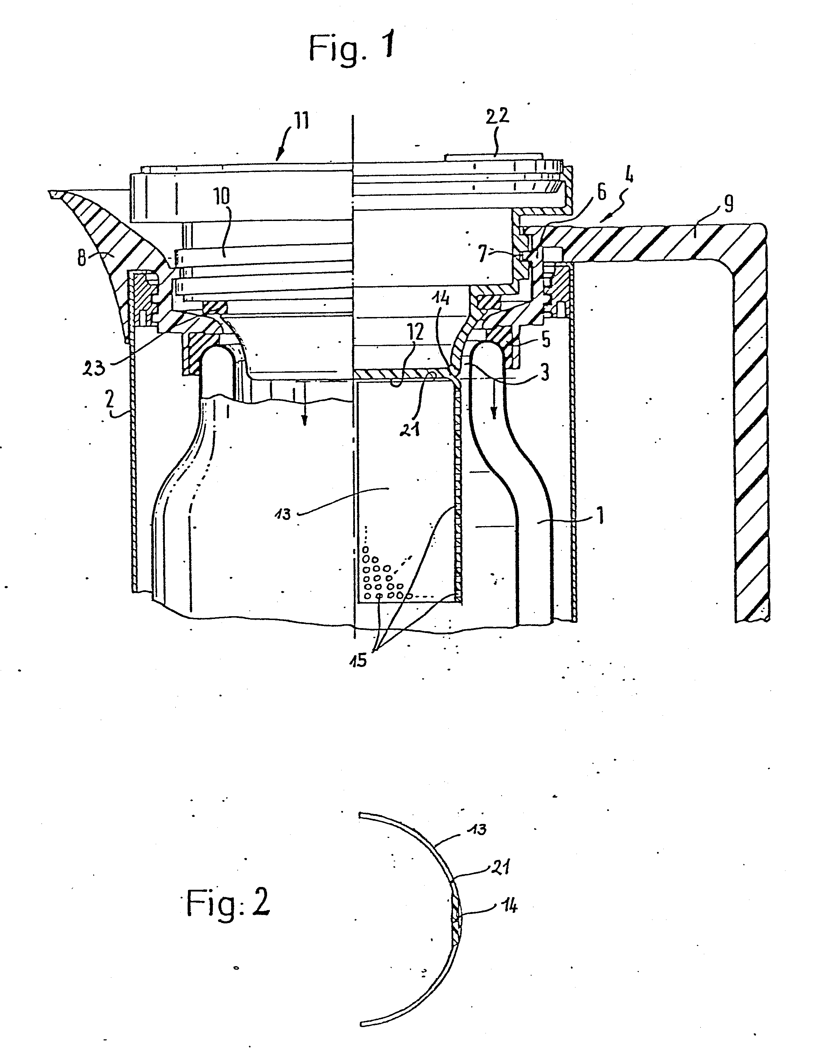

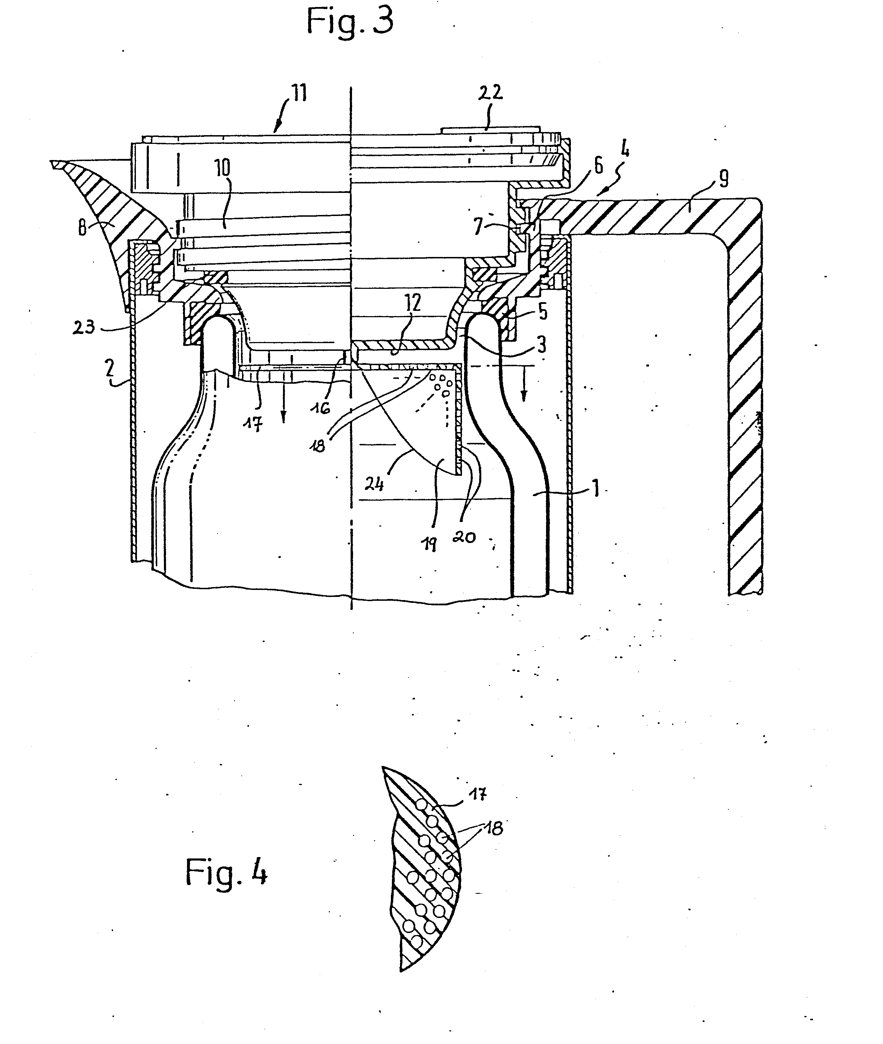

An der Unterseite 12 des Schraubverschlußes gemäß Fig. 1 ist eine gewölbte, im wesentlichen halbzylindrische axial ausgerichtete Platte 13 über ein Gelenk 14 angeformt. Das Gelenk 14 befindet sich (vgl. Fig. 2) etwa in der Mitte der einen, oberen Stirnseite 21 der Platte 13. In der Platte 13 sind Durchgangsöffnungen 15 verteilt ausgebildet. Die Durchgangsöffnungen 15 können gleichmäßig verteilt sein, können auch ausgehend vom Bereich des Gelenkes 14 aus in ihrer Anzahl abnehmen. Der Durchmesser der Durchgangsöffnungen 15 ist derart, daß der Durchgang der Flüssigkeit im Innenbehälter 1 sicher gewährleistet ist, daß jedoch Rückstände, Kräuter, Blätter oder dergleichen nicht durch die Durchgangsöffnungen 15 mitgenommen werden können. Die Dichte der Durchgangsöffnungen 15 ist so, daß zurückgehaltene Kräuter, Blätter, Rückstände oder dergleichen die Durchgangsöffnungen 15 der Platte 13 nicht derart verstopfen können, daß ein Fließen der Flüssigkeit verhindert würde. Die Platte 13 hat somit etwa siebartige Struktur. Weiter bietet es Vorteile, wenn die Platte 13 in axialer Richtung biegeelastisch ist, dagegen in radialer Richtung kaum verformbar ist.

Wenn die Isolierkanne zum Ausgießen der Flüssigkeit im Innenbehälter 1 bei in Ausgießstellung gedrehtem Schraubverschluß 11 , beispielsweise mit Hilfe des Griffs 9 gekippt wird, kippt die Platte 13 um das Gelenk 14 zur Anlage an die Innenwand des Innenbehälters 1. Wären keine Durchgangsöffnungen 15 in der Platte 13 könnte nun keine Flüssigkeit mehr aus der Isolierkanne ausgegossen werden. Die Durchgangsöffnungen 15 ermöglichen jedoch das Ausgießen der Flüssigkeit, halten aber Rückstände, Kräuter, Blätter oder dergleichen in der Isolierkanne 1 zurück. Falls die Platte 13 in axialer Richtung biegeelastisch ausgebildet ist, vermag sie sich besser an den Verlauf der Innenwand des Isolierbehälters 1 anzuschmiegen, wodurch die Wirkung verbessert wird. Es ist dabei zu erwähnen, daß der Abstand zwischen der der Innenwand des Innenbehälters 1 zugewandten Seite der Platte 13 und der Innenwand des Innenbehälters 1 bereits klein ist, so daß kein erheblicher Schwenkwinkel erforderlich ist. Ferner ist zu bemerken, daß das Gelenk 14 noch weiter am Außenrand der Unterseite 12 des Schraubverschlußes 11 angeordnet sein kann, als dies in Fig. 1 angedeutet ist, derart,daß die Stirnseite 21 die Unterseite 12 etwa umgreift.

Fig. 3 und Fig. 4 zeigen eine andere Ausführungsform der Erfindung. Dort ragt etwa mittig von der Unterseite 12 des Schraubverschlußes 11 ein Steg 16 nach unten weg, an dessen Unterseite eine Scheibe 17 radial angeordnet ist, die sich weitestgehend über den Querschnitt der Öffnung 3 des Innenbehälters 1 erstreckt, d.h. deren Außenumfang im wesentlichen den Innenabmessungen der Öffnung 3 des Innenbehälters 1 entspricht. Es sei erwähnt, daß weitere Scheiben 17 in axialer Richtung in ähnlicher Weise vorgesehen sein können, wie dies in der DE-OS 25 48 199.6-16 erläutert ist. Es hat sich nämlich bei Warm- und Kühlhalteversuchen gezeigt, daß der größte Wärmeübergang im Bereich des Schraubverschlußes erfolgt, da dessen Material, nämlich Kunststoff ein weitaus ungünstigere Wärmeübergangszahl als beispielsweise herkömmliche Korkstopfen besitzen. Der Wärmeübergang im Bereich des Schraubverschlußes kann auch nicht entscheidend dadurch verbessert werden, daß der Innenraum des Schraubverschlusses mit einem wärmeisolierenden Werkstoff gefüllt wird.

Durch die einfache Maßnahme des Vorsehens von mindestens einer derartigen Scheibe kann der Wärme- bzw. Kälteverlust einer in der Isolierkanne aufbewahrten Flüssigkeit erheblich herabgesetzt werden, so daß die Flüssigkeit über einen wesentlich längeren Zeitraum von der Isolierkanne in einem gewünschten Temperaturbereich gehalten werden kann. Ferner weist bei der vorliegenden Erfindung diese Scheibe 17 Durchgangsöffnungen 18 zumindest in dem Bereich auf, der in der Ausgießstellung dem Ausgießer 8 zugeordnet ist. Die Anzahl, und damit die Dichte der Durchgangsöffnungen 18 kann auch hier von dem in der Ausgießstellung dem Ausgießer 8 zugewandten Bereich hin abnehmen. In der Ausgießstellung wird auch hier der Strömungsweg für die Flüssigkeit freigegeben, während Rückstände, Blätter, Kräuter oder dergleichen von der Scheibe 17 zurückgehalten werden.

Fig. 3 zeigt ferner, daß zumindest in dem Bereich der Scheibe 17, der in der Ausgießstellung dem Ausgießer 8 zugeordnet ist, ebenfalls eine gewölbte, im wesentlichen halbzylindrische und axial angeordnete Platte 19 vorgesehen sein kann, die ebenfalls Durchgangsöffnungen 2o aufweist. Diese Platte 19 kann ebenfalls in axialer Richtung biegeelastisch sein, es kann jedoch genügen, wenn in diesem Fall der Steg 16 eine Eigenelastizität besitzt, die nur gering sein muß, da nur ein geringer Schwenkwinkel erforderlich ist.

Fig. 3 zeigt ferner, daß die dem Innenraum des Innenbehälters 1 zugewandten Stirn- und Längsseiten der Platte 19 (und in ählicher Weise auch diejenigen der Platte 13 gemäß Fig. 1) nicht notwendigerweise geradlinig verlaufen müssen. Fig. 3 zeigt als Beispiel einen gebogenen beispielsweise parabelförmigen Verlauf des der Scheibe 17 abgewandten Randes 24 der Platte 19.

Dabei muß der Rand 24 an der SCheibe 17 nicht notwendigerweise im mittleren Bereich ansetzen, sondern kann auch an dem der Platte 19 diametral gegenüberliegenden Ende der Scheibe 17 ansetzen (nicht dargestellt). Auch hier wird das Ausgießen der Flüssigkeit in der Ausgießstellung über die Durchgangsöffnungen 18 und 2o der Scheibe 17 bzw. der Platte 19 ermöglicht, wobei Rückstände, Kräuter, Blätter oder dergleichen zurückgehalten werden. Darüberhinaus wird jedoch der Wärmeverlust bzw. der Kälteverlust durch die Durchgangsöffnungen 18 in der Scheibe 17 nur wenig gegenüber einer Scheibe ohne Öffnungen beeinträchtigt.

Es sei erwähnt, daß die Platte 19 an der Scheibe 17 auch mittels eines Gelenkes gelenkig befestigt sein kann, etwa in der Weise wie die Platte 13 an der Unterseite 12 des Schraubverschlußes 11 der Ausführungsform gemäß Fig. 1 angelenkt ist.
Der Schraubverschluß 11 und die Platte 13 bzw. die Scheibe 17 und gegebenenfalls die Platte 19 können in einem einzigen Herstellverfahren hergestellt werden. Dabei kann auch das Gelenk 14 in diesem einzigen Herstellverfahren in an sich üblicher Weise mit hergestellt werden.

Darüberhinaus ergibt sich der weitere Vorteil, daß Isolierkannen der erwähnten Bauart mit erfindungsgemäß ausgebildeten Schraubverschlüssen 11 nachgerüstet werden können.

Es wird also eine Isolierkanne angegeben, in die Grundmaterialien wie Kräuter, Blätter, Pulver oder dergleichen vor dem Einfüllen der heißen oder kalten Flüssig-keit eingegeben werden können, ohne daß bei Ausgießen der aufbereiteten Flüssigkeit die Blätter oder Kräuter oder die Rückstände des Pulvers oder dergleichen mit ausgegossen würden.

ANSPRÜCHE

1. Schraubverschluß für Isolierkannen, die aus einem wärmeisolierenden Innenbehälter und einem diesen umgebenden Mantel bestehen, wobei der Schraubverschluß in einen einen angeformten Ausgießer aufweisenden Kopfteil des Mantels einschraubbar ist, aus Kunststoff besteht und vorzugsweise einen eingesetzten, sich im Schließzustand auf eine Dichtfläche der zu verschließenden Öffnung dichtend anliegenden Dichtring aus elastischem Material enthält, der bei einer Drehung des Schraubverschlußes in eine definierte Ausgießstellung, z.B. um etwa 180°, zum Ausgießen einer Flüssigkeit im Innenbehälter ausreichend weit abgehoben ist,

dadurch gekennzeichnet,
daß von der dem Innenbehälter (1) zugewandten Unterseite (12) des Schraubverschlußes (11) eine Schürze (13,16,19) mit Durchgangsöffnungen (15,18,2o) für die Flüssigkeit so wegragt, daß in der Ausgießstellung Flüssigkeit im Innenbehälter (1) zwangsweise unter Rückhalten von Rückständen, Kräutern, Blättern oder dergleichen in der Flüssigkeit im wesentlichen nur durch die Durchgangsöffnungen (15,18,2o) der Schürze (13,16,19) zum Ausgießer (8) fließt.

2. Schraubverschluß nach Anspruch 1,
dadurch gekennzeichnet,
daß die Schürze als gewölbte etwa halbzylindrische axial angeordnete Platte (13) ausgebildet ist, die an einer Stirnseite (21) etwa in deren Mitte an der Unterseite (12) des Schraubverschlußes (11) gelenkig befestigt ist.

3. Schraubverschluß nach Anspruch 1 oder 2,
dadurch gekennzeichnet,
daß die Schürze (13) in axialer Richtung biegeelastisch ist.

4. Schraubverschluß nach Anspruch 1,
dadurch gekennzeichnet,
daß die Schürze als mindestens eine an der Unterseite (12) des Schraubverschlußes (11) im wesentlichen radial angebrachte und in die Öffnung (3) des Isolierbehälters (1) ragende Scheibe (17) ausgebildet ist, die sich weitestgehend über den Querschnitt der Innenbehälter-Öffnung (3) erstreckt.

5. Schraubverschluß nach einem der Ansprüche 1 bis 3,
dadurch gekennzeichnet,
daß die Schürze durch mindestens eine an dem in
die Öffnung (3) des Innenbehälters (1) ragenden
Bereichs der Unterseite (12) des Schraubverschlußes
(11) befestigte im wesentlichen radial gerichtete
Scheibe (17) gebildet ist, die sich weitestgehend
über den Querschnitt der Innenbehälter-Öffnung (3)
erstreckt und an der eine gewölbte etwa halbzylindrische axial angeordnete Platte (19) angebracht
ist.

6. Schraubverschluß nach Anspruch 4 oder 5,
dadurch gekennzeichnet,
daß die Scheibe (17) von der Unterseite (12) des
Schraubverschlußes (11) beabstandet ist.

7. Schraubverschluß nach Anspruch 5 oder 6,
dadurch gekennzeichnet,
daß die Scheibe (17) und die Platte (19) insbesondere im Verbindungsbereich Durchgangsöffnungen
(18,2o) aufweisen.

8. Schraubverschluß nach einem der Ansprüche 1 bis 7,
dadurch gekennzeichnet,
daß in der Ausgießstellung die Anzahl der Durchgangsöffnungen (15,18,2o) in der Schürze (13,16,19)
mit dem Abstand von dem Ausgießer (8) abnimmt.

9. Schraubverschluß nach einem der Ansprüche 1 bis 8,
dadurch gekennzeichnet,
daß die Schürze (13,16,19) an der Unterseite (12)
des Schraubverschlußes (11) einstückig (14;16)
angeformt ist.

0124694

## Fig. 1

## Fig. 2

**Fig. 3**

**Fig. 4**